# EUROPÄISCHE PATENTSCHRIFT

(11) **EP 1 305 651 B1**
(45) Veröffentlichungstag und Bekanntmachung des Hinweises auf die Patenterteilung: **24.10.2007**
(21) Anmeldenummer: 01984350.7
(22) Anmeldetag: 21.06.2001
(51) Int. Cl.: G01S 5/22, G01S 15/42, B60R 21/01, G01S 15/02, G01S 15/04

(54) **VERFAHREN ZUR AKUSTISCHEN ORTUNG VON PERSONEN IN EINEM DETEKTIONSRAUM**
METHOD FOR THE ACOUSTIC LOCALIZATION OF PERSONS IN AN AREA OF DETECTION
PROCEDE POUR LA DETECTION ACOUSTIQUE DE PERSONNES DANS UNE ZONE DE DETECTION

(30) Priorität: 20.07.2000 DE 10035222
(43) Veröffentlichungstag der Anmeldung: 02.05.2003
(73) Patentinhaber: ROBERT BOSCH GMBH, 70442 Stuttgart (DE)
(72) Erfinder: HOETZEL, Jürgen, 61197 Florstadt (DE)
(86) Internationale Anmeldenummer: PCT/DE2001/002292
(87) Internationale Veröffentlichungsnummer: WO 2002/008782

(56) Entgegenhaltungen:
- EP-A- 0 831 458
- JP-A- 11 041 577
- US-A- 5 890 085
- PATENT ABSTRACTS OF JAPAN vol. 2000, no. 02, 29. Februar 2000 (2000-02-29) & JP 11 304906 A (NIPPON TELEGR &TELEPH CORP <NTT>), 5. November 1999 (1999-11-05)
- PATENT ABSTRACTS OF JAPAN vol. 1998, no. 13, 30. November 1998 (1998-11-30) & JP 10 227849 A (FUJI XEROX CO LTD), 25. August 1998 (1998-08-25)
- PATENT ABSTRACTS OF JAPAN vol. 2000, no. 10, 17. November 2000 (2000-11-17) & JP 2000 193752 A (MATSUSHITA ELECTRIC IND CO LTD), 14. Juli 2000 (2000-07-14)

## Beschreibung

### Stand der Technik

Die Erfindung betrifft ein Verfahren zur akustischen Ortung von Personen in einem Detektionsraum mit schallabgebenden und schallaufnehmenden Elementen durch Abgabe von Schallsignalen in den Detektionsraum und Messung der reflektierten Schallsignale.

Es sind sogenannte Out-Of-Position-Systeme (OOP-Systeme) bekannt, mit denen die Position von Personen, Kindersitzen oder nicht belegten Sitzen zur Airbag-Steuerung in Kraftfahrzeugen erfasst wird. Hierzu sind Sensoren in der Fahrgastzelle.verteilt, wie z.B. Ultraschallsensoren, Infrarotsensoren; kapazitive-Sensoren oder Mikrowellensensoren Um im Notfall einen Airbag bedarfsweise in Abhängigkeit von der vor dem Airbag befindlichen Person oder Objekt aktivieren zu können oder ihn vollständig ausschalten zu können, wenn z.B. ein Kindersitz vor dem Airbag installiert ist, wird die Belegung des Fahrgastraums dynamisch während einer gesamten Fahrt mit Hilfe der Sensoren überwacht.

Aus der JP 11-041577 ist eine Vorrichtung zur Positionsbestimmung eines Sprechers> bekannt, bei dem eine Position des Sprechers über ein Mikrophonfeld erfasst wird. In Zusammenhang mit einer Kameraeinheit wird eine Positionskarte für die Position des Sprechers erstellt.

Insbesondere sind OOP-Systeme bekannt, bei denen Ultraschallsensoren im Impuls-Echo-Betrieb mit impulsartigen Frequenzen im nicht hörbaren Bereich beaufschlagt werden und in den Sendepausen das Echo ermittelt wird. Aus dem Zeitverzug des Echos und der empfangenden Signalamplitude kann auf die Belegung im Fahrgastraum geschlossen werden. Als schallabgebende und schallaufnehmende Elemente dieser Ultraschallsensoren werden elektrisch vorgespannte Folienmembrane verwendet, die mit einer Ultraschallfrequenz im nicht hörbaren Bereich angeregt werden. Niederfrequente Frequenzanteile der Schallaufnehmer, insbesondere im hörbaren Bereich, werden durch elektronische Filter im Steuergerät des OOP-Systems für die weitere Auswertung bedämpft, da diese niederfrequenten Frequenzanteile für den Puls-Echo-Betrieb eindeutige Störsignale sind, die keine Informationen über das Echo enthalten. Zur Überwachung eines vollständigen Detektionsraumes werden mehrere derartige Ultraschallsensoren mit Folienmembranen in einem Gehäuse mit einem definierten Abstand der Ultraschallsensoren zueinander genutzt.

Aufgabe der Erfindung ist es, ein Verfahren zur akustischen Ortung von Personen in einem Detektionsraum zu schaffen, mit dem die Zuverlässigkeit, Genauigkeit und Qualität der Positionserkennung herkömmlicher OOP-Systeme verbessert wird.

Die Aufgabe wird durch das Verfahren gemäß Patentanspruch 1 durch die Schritte gelöst von:
- Messen von Schallsignalen im Frequenzbereich der menschlichen Sprache mit mehreren schallaufnehmenden Elementen,
- Bestimmen des Zeitversatzes zwischen den an den schallaufnehmenden Elementen gemessenen Schallsignalen und
- Berechnen der Position der Schallquelle aus dem Zeitversatz und den Positionen der schallaufnehmenden Elemente.

Es wird somit vorgeschlagen, die hörbaren Sprachsignale zusätzlich mit auszuwerten und Positionen von Schallquellen zu ermitteln. Im Unterschied hierzu wurden bei herkömmlichen OOP-Systemen die hörbaren Schallsignale gezielt herausgefiltert, da diese für die bekannten Positionsbestimmungsverfahren Impuls-Echo-Betrieb reine Störanteile sind.

Die Positionen der Schallquellen können vorteilhaft durch Korrelation der gemessenen hörbaren Schallsignale erfolgen. Hierbei können hinreichend bekannte Korrelationsverfahren der digitalen Signalenverarbeitung, wie z.B. aus Mustererkennungsverfahren bekannt sind, eingesetzt werden.

Es ist besonders vorteilhaft, wenn die räumliche Verlagerung von ermittelten Schallquellen bestimmt wird und ortsstabile Schallquellen herausgefiltert werden. Auf diese Weise werden die zur Airbag-Steuerung irrelevanter Informationen über die Positionen von ortsstabilen Schallquellen eliminiert.

Zur Erhöhung der Genauigkeit des Verfahrens ist es jedoch ratsam, die Positionen von ortsstabilen und nicht ortsstabilen Schallquellen zu überlagern.

Die hörbaren Schallsignale der ortsstabilen Schallquellen können auch in bekannter Weise zur Kalibrierung des Systems zur Ausführung des Verfahrens verwendet werden.

Als weiteres schallaufnehmendes Element kann zusätzlich das Mikrofon einer Freisprechanlage eines Mobiltelefons verwendet werden. Als schallabgebende Elemente können zusätzlich zu den vorhandenen Wandlern des OOP-Systems die Lautsprecher eines Autoradios genutzt werden. Auf diese Weise kann das vorhandene OOP-System zusammen mit weiteren ebenfalls vorhandenen Anlagen ohne einen großen zusätzlichen Installationsaufwand ausgeführt werden.

Die Erfindung wird nachfolgend näher erläutert.

Herkömmliche OOP-Systeme zur Positionsbestimmung von Personen, Kindersitzen oder nicht belegten Sitzen in Kraftfahrzeugen zur Airbag-Steuerung haben eine Vielzahl von Sensoren, wie z.B. Ultraschallsensoren, die in der Fahrgastzelle des Kraftfahrzeuges verteilt sind. Hierbei werden Signale in den Fahrgastraum ausgesendet und reflektierende Signale gemessen, mit denen auf die Position von Personen oder Objekten geschlossen werden kann. Zusätzlich können in den Kraftfahrzeugsitzen Taster oder Gewichtssensoren eingebaut sein, um bei einem nicht belegten Fahrzeugsitz die für den Fahrzeugsitz zuständigen Airbags auszuschalten.

Zusätzlich zu der Messung und Auswertung von Reflektionen erfolgt nunmehr eine Auswertung von Schallsignalen im hörbaren Bereich. Da sich Schallsignale in Luft mit einer endlichen und bekannten Geschwindigkeit ausbreiten, kann aus der Signalverschiebung eines an verschiedenen Orten gemessenen Schallsignals einer gemeinsamen Schallquelle auf die Position der Schallquelle geschlossen werden. Dies erfolgt mit bekannten Mitteln der digitalen Signalverarbeitung durch Korrelation der gemessehen Schallsignale der verschiedenen schallaufnehmenden Elemente unter Berücksichtung der bekannten und feststehenden Positionen der schallaufnehmenden Elemente. Über einen Zeitraum betrachtet sind einige der Schallquellen ortsstabil, während andere Schallquellen ihre Position ändern. Die ermittelten ortsfesten Positionen können zur Verfeinerung der Randbegrenzungen des Detektionsraumes verwendet werden. Diese ortsfesten Schallquellen können aber auch ignoriert werden. Durch Begrenzung des Detektionsraumes können nicht relevanten Quellen, wie z.B.Lautsprecher in Türverkleidungen und vibrierende Elemente elimiert werden. Ein OOP-System kann unter Zuhilfenahme der ermittelten ortsfesten Positionen kalibriert werden. Zudem kann das System unter Verwendung der vorhandenen Signalquellen, wie z.B. die Autoradiolautsprecher kalibriert werden. Sofern die Position der Lautsprecher bekannt und mindestens vier schallaufnehmende Elemente die Signale der Lautsprecher empfangen, können die schallaufnehmenden Elemente sich gegenseitig kalibrieren, da immer mindestens drei schallaufnehmende Elemente zur Kalibrierung verfügbar sind. Anderenfalls ist als Zusatzinformation noch der Absendezeitpunkt der Schallsignale und damit eine elektrische Verbindung zu den Lautsprechern erforderlich.

Es können auch andere Geräteeinheiten als schallaufnehmende Elemente verwendet werden, wie z.B. die Mikrofone einer Freprechanlage für Mobiltelefone. Zur: Korrelation der gemessenen Schallsignale kann entweder die bekannte Position des Mikrofons verwendet. Die Position kann aber auch während eines automatischen Kalibrierungsvorgangs mit Hilfe der an unterschiedlichen Stellen angeordneten Lautsprecher in bekannter Weise erfolgen.

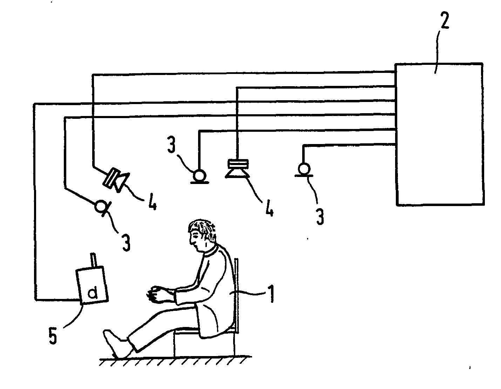

## Patentansprüche

1. Verfahren zur akustischen Ortung von Personen in einem Detektionsraum mit schallabgebenden und schallaufnehmenden Elementen durch Abgabe von Ultraschallsignalen in den Detektionsraum und Messung der reflektierten Ultraschallsignale zur Verwendung in einem Kraftfahrzeug zur Airbag-Steuerung, wobei zusätzlich Schallsignale im Frequenzbereich der menschlichen Sprache mit mehreren schallaufnehmenden Elementen gemessen werden, wobei der Zeitversatz zwischen den an den schallaufnehmenden Elementen gemessenen Schallsignalen im Frequenzbereich der menschlichen Sprache bestimmt wird, wobei die Positionen einer Schallquelle im Frequenzbereich der menschlichen Sprache aus dem Zeitversatz und den Positionen der schallaufnehmenden Elemente berechnet wird, wobei die räumliche Verlagerung von ermittelten Schallquellen bestimmt wird und wobei ortsstabile Schallquellen herausgefiltert werden.

2. Verfahren nach Anspruch 1, **gekennzeichnet durch** Korrelation der gemessenen Schallsignale im Frequenzbereich der menschlichen Sprache.

3. Verfahren nach einem der vorherigen Ansprüche, **gekennzeichnet durch** Messen von Schallsignalen im Frequenzbereich der menschlichen Sprache mit einem Mikrofon einer Freisprechanlage für ein Mobiltelefon als schallaufnehmendes Element in einem Kraftfahrzeug.

## Claims

1. Method for acoustic position-finding for people in a detection space with sound-emitting and sound-receiving elements by emitting ultrasonic signals into the detection space and measuring the reflected ultrasonic signals for use in a motor vehicle for airbag control, where additionally sound signals in the frequency range of human speech are measured with a plurality of sound-receiving elements, where the time delay between the sound signals in the frequency range of human speech which are measured on the sound-receiving elements is determined, where the positions of a sound source in the frequency range of human speech is calculated from the time delay and the positions of the sound-receiving elements, where the physical displacement of ascertained sound sources is determined and where sound sources with a stable location are filtered out.

2. Method according to Claim 1, **characterized by** correlation of the measured sound signals in the frequency range of human speech.

3. Method according to one of the preceding claims, **characterized by** measurement of sound signals in the frequency range of human speech using a microphone from a hands-free installation for a mobile telephone as a sound-receiving element in a motor vehicle.

## Revendications

1. Procédé de localisation acoustique de personnes dans un volume de détection avec des éléments émetteurs et récepteurs de son, par l'émission de signaux d'ultrasons dans le volume de détection et la mesure des signaux ultrasons réfléchis pour une application à la commande de coussins gonflables dans un véhicule automobile, selon lequel, en plus on mesure des signaux sonores dans la plage de fréquence de la voix humaine avec plusieurs éléments récepteurs de son, on détermine le décalage de temps entre les signaux sonores mesurés par les éléments récepteurs de son dans la plage de fréquence de la voix humaine,
on calcule les positions d'une source sonore dans la plage de fréquence de la voix humaine à partir du décalage de temps et des positions des éléments récepteurs de son,
on détermine le décalage spatial des sources sonores déterminées et on sépare par filtrage les sources sonores fixes.

2. Procédé selon la revendication 1,
**caractérisé par**
corrélation des signaux sonores mesurés dans la plage de fréquence de la voix humaine.

3. Procédé selon l'une quelconque des revendications précédentes,
**caractérisé par**
la mesure des signaux sonores dans la plage de fréquence de la voix humaine avec un micro d'une installation main libre de téléphone mobile, comme élément récepteur de son dans un véhicule automobile.
